# EUROPEAN PATENT APPLICATION

(11) **EP 4 552 926 A1**
(43) Date of publication of application: **14.05.2025**
(21) Application number: 23208530.8
(22) Date of filing: 08.11.2023
(51) Int. Cl.: B60Q 1/30, B60Q 11/00, H05B 39/10, B60Q 1/00

(54) **SYSTEM OF TAILLIGHT MODULES ARRANGED ON A BACK AND OF A VEHICLE AND VEHICLE COMPRISING THE SYSTEM**

(71) Applicant: KNORR-BREMSE Systeme für Nutzfahrzeuge GmbH, 80809 München (DE)
(72) Inventor: BATAI, Andras, 7623 Pecs (HU); SZÖLLOSI, Ádám, H-1119 Budapest (HU); NÉMETH, Huba, H-1116 Budapest (HU); GYURKÓ, Zoltán, 1047 Budapest (HU); KOMLÓS, Tamás, 6448 Csávoly (HU); SZOKOL, Tamás, 1112 Budapest (HU); MERZA, Valér, 2000 Szentendre (HU); ZÖLDHEGYI, Valter, 2049 Diósd (HU); DUDAS, Zsolt, 6728 Szeged (HU)

(57) **Abstract**

A system (2) of taillight modules (3, 3') arranged on a back end (4) of a vehicle (1) comprises several taillight modules (3, 3'). At least two of the taillight modules (3, 3') are arranged on a left side of the back end (4) and at least two of the taillight modules (3, 3') are arranged on a right side. The taillight modules (3, 3') arranged on one side respectively comprise a first lamp (5) providing an identical function. The system (2) is supplied by at least one power supply circuit (6) and comprises at least two control modules (9). At least one first taillight module (3) on the left side and on the right side are controlled by a first control module (9) and at least one second taillight module (3') on the left side and on the right side are controlled by a second control module (9').

## Description

The invention relates to a system of taillight modules arranged on a back end of a vehicle and a vehicle comprising the system, in particular, for vehicles being commercial vehicles, as the case may be, with trailers.

The legislation, e.g., currently UN ECE R 48, prescribes the requirements concerning lights which must be fitted to the rear of any road vehicles and trailers. The minimum required lights are a brake light, a taillight, and turn indicator lamps. These lights must be fitted to the right and left rear of the vehicle.

In addition, there are optional lights at the end of the vehicle: e.g., the reverse light, and the fog light. Further, end-outline markers are mounted on the rear corners of the trailers and side markers are mounted to the sides of commercial vehicles and trailers.

If one of the light fails, the vehicle operation must be interrupted, and the light must be repaired to be able to continue a safe vehicle operation. To avoid such interruption and immediate maintenance need, redundant taillight modules respectively including all of the provided lights can solve the issue to substitute the faulty lights, and the vehicle can continue its operation. However, such redundancies in general imply additional costs because more lights need to be fitted to the rear of the vehicle.

For avoiding such redundancies, document DE 40 41 459 A1 discloses a device including a detector being able to detect a failure of, e.g., a brake light or a turning indicator light. In case of a failure of, e.g., the brake light on one side of a back end of the vehicle, the detector detects this failure and activates the turning indicator light on the same side of the back end of the vehicle for compensating the faulty brake light. This compensation also operates vice versa. However, due to the operation of a light intended for another purpose, this could lead to confusion of other road users.

Nevertheless, not only a lamp in a taillight module may have a failure but, also, a controller or a power supply of the lamps can be defective.

The object underlying the invention is to remedy the above disadvantages and to provide a system of taillight modules enabling a safe operation without increased costs due to immediate maintenance or excessive redundancy.

The object is achieved by a system according to claim 1 and a vehicle according to claim 9. Advantageous further developments of the invention are included in the dependent claims.

According to an aspect of the invention, a system of several taillight modules arranged on a back end of a vehicle comprises several taillight modules, wherein at least two of the several taillight modules are arranged on a left side of the back end of the vehicle and at least two of the several taillight modules are arranged on a right side of the back end of the vehicle. At least two of the at least two taillight modules arranged on one of the sides of the back end of the vehicle respectively comprise at least one first lamp configured to provide an identical function. The system is configured to be supplied by at least one power supply circuit. Further, the system comprises at least two independent control modules and at least one first taillight module on the left side and at least one first taillight module on the right side are configured to be controlled by a first control module of the independent control modules and at least one second taillight module on the left side and at least one second taillight module on the right side are configured to be controlled by a second control module of the independent control modules.

The taillight modules arranged on the back end of the vehicle are either arranged on a backside of the vehicle or on lateral sides of the vehicle in the region of the back end. The function provided by the first lamp is, e.g., the function of a brake light, a taillight, or a turning indicator light. The control modules are independent from one another such that any control module can operate even though another control module is defective.

Due to a redundancy of the at least one first lamp on each side of the back end of the vehicle and the redundancy of the control module, a safe operation without increased costs due to immediate maintenance or excessive redundancy is achieved.

According to an advantageous implementation of the system, the taillight modules respectively comprise a housing, and the first control module is accommodated in a housing of at least one of the first taillight modules, and the second control module is accommodated in the housing of at least one of the second taillight modules.

In a further advantageous implementation of the system, at least two of the at least two taillight modules arranged on the left side and at least two of the at least two taillight modules arranged on the right side respectively comprise a common housing.

According to a further advantageous implementation of the system, it is configured to be supplied by at least two power supply circuits, wherein the first taillight module arranged on the left side and the first taillight module arranged on the right side are supplied by a first power supply circuit, and the second taillight module arranged on the left side and the second taillight module arranged on the right side are supplied by a second power supply circuit.

Due to a further advantageous implementation of the system, at least one of the at least two taillight modules on the left side and at least one of the at least two taillight modules on the right side respectively comprise a first lamp configured to provide a function of one of a brake light, a taillight, and a turning indicator light.

In an advantageous further development of the system, the at least one of the at least two taillight modules on the left side and the at least one of the at least two taillight modules on the right side comprise several first lamps configured to respectively provide the function of the brake light, the taillight, and the turning indicator light.

The several functions cannot only be provided by one first lamp in one of the taillight modules but they can also be provided by several first lamps in one of the taillight modules.

In a further advantageous further development of the system, at least one of the taillight units comprise a plurality of the connectors.

According to a further advantageous implementation of the system, the external light unit comprises a second lamp configured to provide a function of one of a group of a reverse light, a fog light, a license plate light, a side marker light, and an end outlined marker light.

In a further advantageous implementation of the system, at least one of the taillight modules comprises at least one connector configured to supply an external light unit connected to the connector with power from one of the at least one power supply circuit supplying the respective taillight module, the power being controlled by a control module controlling the respective taillight module.

According to a further aspect of the invention, a vehicle comprises a system of several taillight modules arranged on a back end of a vehicle, the system being described above.

In a further advantageous implementation of the vehicle, it comprises a trailer provided with the system of several taillight modules arranged on the back end of the vehicle, the system being described above.

Subsequently, the invention is elucidated by means of embodiments referring to the drawings.

In particular,
- Fig. 1: shows a schematic diagram of a vehicle provided with a system of several taillight modules; and
- Fig. 2: shows a schematic diagram of one of the taillight modules.

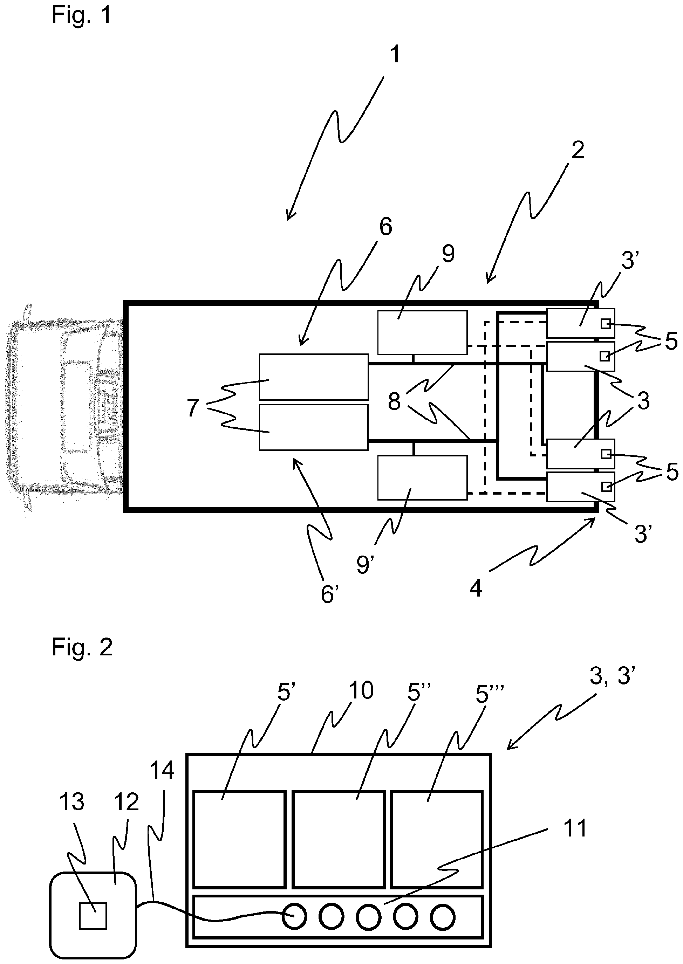

**Fig. 1** shows a schematic diagram of a vehicle 1 provided with a system 2 of several taillight modules 3, 3'. In an alternative embodiment, the vehicle 1 is provided with a trailer and the trailer is provided with the system 2 of several taillight modules 3, 3'.

The system 2 comprises the taillight modules 3, 3' arranged on a back end 4 of the vehicle 1. The taillight modules 3, 3' are arranged on the backside of the vehicle 1 or, alternatively, on lateral sides of the vehicle 1 in the region of the back end 4. In this embodiment, the system 2 comprises four taillight modules 3, 3'.

Two taillight modules 3 are arranged on a left side of the back end 4 of the vehicle 1 and two taillight modules 3' are arranged on a right side of the back end 4 of the vehicle 1. In alternative embodiments, another number of taillight modules 3, 3' can be provided, wherein, on each side, at least two taillight modules 3, 3' are arranged.

The two taillight modules 3, 3' arranged on one of the sides of the back end 4 of vehicle 1 respectively comprise one first lamp 5 configured to provide an identical function. These functions are the function of a brake light, a taillight, and a turning indicator light.

In alternative embodiments, in particular, if three or more taillight modules 3, 3' are arranged on one of the sides of the back end 4, each of the taillight modules 3, 3' comprise one first lamp 5 configured to provide the identical function; nevertheless, in further alternative embodiments, not all of the taillight modules 3, 3' arranged on one of the sides of the back end 4 must have the first lamp 5 providing the identical function but at least two taillight modules 3 comprising the first lamp providing the identical function have to be arranged. In yet further alternative embodiments, more than one first lamp providing a specific function can be provided in one of the taillight modules 3.

The system 2 comprises two independent control modules 9, 9'. A first control module 9 controls a first taillight module 3 arranged on the left side of the back end 4 of the vehicle 1 and a first taillight module 3 arranged on the right side of the back end 4 of the vehicle 1. A second control module 9' controls a second taillight module 3' arranged on the left side of the back end 4 of the vehicle 1 and a second taillight module 3' arranged on the right side of the back end 4 of the vehicle 1. The control modules 9, 9' are independent from one another such that any control module 9, 9' can operate even though another control module 9 is defective. The control modules 9, 9' control the taillight modules 3, 3' such that they switch the first lamps 5 in the taillight modules 3, 3' on and off or, if the first lamps 5 are provided in a specific manner, e.g., being an RGB LED, the control modules 9, 9' control the taillight modules 3, 3' such that they control a color and/or brightness of the first lamps 5. In Fig. 1, the control paths are illustrated by dashed lines.

In alternative embodiments, more than two independent control modules 9', 9" are provided, wherein at least two of the taillight modules on one of the sides of the back end 4 are controlled by different control modules 9, 9'.

The system 2 is supplied by two power supply circuits 6, 6'. The power supply circuits 6, 6' respectively comprise a power supply device 7 and power supply lines 8 illustrated by solid lines. One of the power supply circuits 6 supplies one of the control modules 9, 9' and, if the first lamps 5 in the taillight modules 3 are not directly supplied by the control modules 9, 9', the power supply circuits 6, 6' additionally supply the first lamps 5 in one of the taillight modules 3, 3'. In particular, the first taillight module 3 on the left side of the back end 4 of the vehicle 1 controlled by the first control module 9 and the first taillight module 3 on the right side of the back end 4 of the vehicle 1 controlled by the first control module 9 are supplied by a first power supply circuit 6 and the second taillight module 3' on the left side of the back end 4 of the vehicle 1 controlled by the second control module 9' and the second taillight module 3' on the right side of the back end 4 of the vehicle 1 controlled by the second control module 9' are supplied by a second power supply circuit 6'.

In alternative embodiments, only one power supply circuit 6, 6' is provided. The power supply circuits 6, 6' are supplied by one power supply system including a battery. In alternative embodiments, the power supply circuits 6 are provided by redundant power supply systems.

**Fig. 2** shows a schematic diagram of one of the taillight modules 3, 3'. The taillight module 3, 3' comprises a housing 10. The lamps accommodated in the housing 10 are defined as first lamps 5. In the embodiment shown in Fig. 2, a first lamp 5' providing a function of the brake light, a first lamp 5" providing a function of the taillight, and a first lamp 5‴ providing a function of the turning indicator light are accommodated. In alternative embodiments, first lamps 5 are accommodated which do not provide all of these functions but only one or two of the functions or, in further alternative embodiments, additional first lamps 5 providing further functions are accommodated. In further alternative embodiments, several first lamps 5 are provided for one function.

In the embodiment shown in Fig. 2, one of the taillight modules 3, 3' comprises an own housing 10. In alternative embodiments, at least two taillight modules 3, 3' arranged on the left side of the back end 4 of the vehicle 1 are accommodated in one housing 10 and at least two taillight modules 3, 3' arranged on the right side of the back end 4 of the vehicle 1 are accommodated in one housing 10 so that the taillight modules 3, 3' arranged on one side of the back end 4 of the vehicle 1 respectively comprise a common housing.

In alternative embodiments, the first control module 9 is accommodated in the housings 10 of the first taillight modules 3 or only in one of the housings 10 of the first taillight modules 3. In further alternative embodiments, the second control module 9' is accommodated in the housings 10 of the second taillight modules 3' or only in one of the housings 10 of the second taillight modules 3'.

The taillight module 3, 3' further comprises a connector 11 comprising a plurality of contacts. By means of the connector 11 an external light unit 12 connected to the connector 11 is supplied with power from the power supply circuit 6, 6' supplying the taillight module 3, 3', the power being controlled by the control module 9, 9' controlling the taillight module 3, 3'. In Fig. 2, the connection between the taillight module 3, 3' and the external light unit 12 is schematically illustrated by one line 14. In alternative embodiments, the taillight module 3, 3' comprises no connector 11 or a plurality of connectors 11. In further alternative embodiments, the connector 11 comprises only one contact.

The external light unit 12 comprises a second lamp 13 providing a function of one of group of a reverse light, a fog light, a license plate light, a side marker light, and an end outline marker light. The lamps accommodated in the external light unit 12 are defined as second lamps 13. Depending on the function of the second lamp 13, the external light unit is arranged in the region of the lateral sides of the back end 4 of the vehicle 1 or, in case of the function of the license plate light, the external light unit is arranged close to the license plate either in the center of the back end 4 of the vehicle 1 or in the region of one of the lateral sides. In alternative embodiments, the lamp in the external light unit 12 also can provide the functions of a brake light, a taillight, and a turning indicator light, or the external light unit 12 comprises several second lamps 13 providing different functions.

### LIST OF REFERENCE SIGNS

- 1: vehicle
- 2: system
- 3: first taillight module
- 3': second taillight module
- 4: back end
- 5: first lamp
- 6: first power supply circuit
- 6': second power supply circuit
- 7: power supply device
- 8: power supply line
- 9: first control module
- 9': second control module
- 10: housing
- 11: connector
- 12: external light unit
- 13: second lamp
- 14: line

## Claims

1. A system (2) of taillight modules (3, 3') arranged on a back end (4) of a vehicle (1), the system (2) comprising
several taillight modules (3, 3'), wherein at least two of the several taillight modules (3, 3') are arranged on a left side of the back end (4) of the vehicle (1) and at least two of the several taillight modules (3, 3') are arranged on a right side of the back end (4) of the vehicle (1), wherein
at least two of the at least two taillight modules (3, 3') arranged on one of the sides of the back end (4) of the vehicle (1) respectively comprise at least one first lamp (5) configured to provide an identical function,
the system (2) is configured to be supplied by at least one power supply circuit (6), and
the system (2) comprises at least two independent control modules (9), wherein at least one first taillight module (3) on the left side and at least one first taillight module (3) on the right side are configured to be controlled by a first control module (9) of the independent control modules (9) and at least one second taillight module (3') on the left side and at least one second taillight module (3') on the right side are configured to be controlled by a second control module (9') of the independent control modules (9).

2. The system (2) of claim 1, wherein
the taillight modules (3, 3') respectively comprise a housing (10), and
the first control module (9) is accommodated in the housing (10) of at least one of the first taillight modules (3), and the second control module (9') is accommodated in the housing of at least one of the second taillight modules (3').

3. The system (2) of claim 1 or 2, wherein
at least two of the at least two taillight modules (3, 3') arranged on the left side and at least two of the at least two taillight modules (3, 3') arranged on the right side respectively comprise a common housing (10).

4. The system (2) of anyone of claims 1 to 3, wherein
the system (2) is configured to be supplied by at least two power supply circuits (6, 6'), wherein
the first taillight module (3) arranged on the left side and the first taillight module (3) arranged on the right side are supplied by a first power supply circuit (6), and
the second taillight module (3') arranged on the left side and the second taillight module (3') arranged on the right side are supplied by a second power supply circuit (6').

5. The system (2) of anyone of claims 1 to 4, wherein
at least one of the at least two taillight modules (3, 3') on the left side and at least one of the at least two taillight modules (3, 3') on the right side respectively comprise a first lamp (5) configured to provide a function of one of a brake light, a taillight, and a turning indicator light.

6. The system (2) of claim 5, wherein
the at least one of the at least two taillight modules (3, 3') on the left side and the at least one of the at least two taillight modules (3, 3') on the right side comprise several first lamps (5) configured to respectively provide the function of the brake light, the taillight, and the turning indicator light.

7. The system (2) of claim 5 or 6, wherein
at least one of the taillight units (3, 3') comprise a plurality of the connectors (11).

8. The system (2) of anyone of claims 5 to 7, wherein
the external light unit (12) comprises a second lamp (13) configured to provide a function of one of a group of a reverse light, a fog light, a license plate light, a side marker light, and an end outline marker light.

9. The system of anyone of the preceding claims, wherein
at least one of the taillight modules 3, 3' comprises at least one connector (11) configured to supply an external light unit (12) connected to the connector (11) with power from one of the at least one power supply circuit (6, 6') supplying the respective taillight module (3, 3'), wherein the power being controlled by a control module (9, 9') controlling the respective taillight module (3, 3')

10. A vehicle (1) comprising a system (2) of anyone of claims 1 to 9.

11. The vehicle (1) of claim 10, wherein the vehicle (1) comprises a trailer provided with a system (2) of anyone of claims 1 to 9.
